(19) Europäisches Patentamt
European Patent Office
Office européen des brevets

(11) **EP 4 394 159 A1**

(12) **EUROPEAN PATENT APPLICATION**

(43) Date of publication:
**03.07.2024 Bulletin 2024/27**

(21) Application number: **23220408.1**

(22) Date of filing: **27.12.2023**

(51) International Patent Classification (IPC):
***E21B 43/12*** (2006.01)

(52) Cooperative Patent Classification (CPC):
**E21B 43/12;** E21B 2200/22

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 US 202218146561**

(71) Applicants:
• **Services Pétroliers Schlumberger
75007 Paris (FR)**
Designated Contracting States:
**FR**
• **GeoQuest Systems B.V.
2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **DABHOLKAR, Dinesh
411006 Pune (IN)**
• **MANIKANI, Sunil
411006 Pune (IN)**
• **RAWAT, Devina
50450 Kuala Lumpur (MY)**

(74) Representative: **Schlumberger Intellectual Property Department
Parkstraat 83
2514 JG Den Haag (NL)**

(54) **SLUG MONITORING AND FORECASTING IN PRODUCTION FLOWLINES THROUGH ARTIFICIAL INTELLIGENCE**

(57) A method for multi-horizon forecasting of gas-liquid slug flow is provided. Field data for a well is obtained. The field data comprises a plurality of features. The plurality of features is correlated across a set of historic data to generate time series data for each of the plurality of features. The time series data is processed by a machine learning model to generate a multi-horizon forecast of a flow pattern for the well, and the output is presented.

*FIG. 3*

**Description**

BACKGROUND

Pipe condition monitoring, flow condition monitoring and flow assurance are important in oilfield production systems particularly subsea systems with long tiebacks-hydrocarbon transportation pipelines. In such production systems and pipelines, flow analysis, flow assurance and pipeline monitoring may be employed for the detection of abnormal conditions in the production or transportation of hydrocarbons. For example, in a subsea gas production system, liquids may accumulate and produce slug flow conditions that may overload a surface handling system.

Although several empirical models have been developed to understand gas-liquid slugging, applications in production fields are limited. A lack of understanding of actual physics of multiphase flow, complex scale-up processes, and insufficient tuning due to scarce field measurements can hinder actual applicability of these models. As a result, physics-based models often fail to capture actual slugging behavior of the field.

SUMMARY

In general, in one aspect, one for more embodiments are related to a method for multi-horizon forecasting of gas-liquid slug flow. The method includes obtaining oilfield data for a well, the field data comprising a plurality of features. The method also includes correlating the plurality of features across a set of historic data to generate time series data for each of the plurality of features. The method further includes processing the time series data by a machine learning model to generate a multi-horizon forecast of a flow pattern for the well. The method includes presenting the output.

Other aspects of the invention will be apparent from the following description and the appended claims.

BRIEF DESCRIPTION OF DRAWINGS

FIG. 1 depicts a schematic view of a field in which one or more embodiments may be implemented.

FIG. 2 depicts a diagram of slug flow in accordance with one or more embodiments of the disclosure.

FIG 3 is a diagram of a computing system in accordance with one or more embodiments of the disclosure.

FIG. 4 is a functional diagram of a temporal fusion transformer model in accordance with one or more illustrative embodiments.

FIG. 5 shows a flowchart in accordance with one or more examples.

FIG. 6 is an illustration of a workflow through an exemplary system in accordance with one or more illustrative embodiments.

FIG. 7 shows a computing system in accordance with one or more embodiments of the invention.

Like elements in the various figures are denoted by like reference numerals for consistency.

DETAILED DESCRIPTION

In the following detailed description of embodiments of the disclosure, numerous specific details are set forth in order to provide a more thorough understanding of the disclosure. However, it will be apparent to one of ordinary skill in the art that the disclosure may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

The present disclosure relates to the application of machine learning algorithms to identify slugging flow pattern from real-time field measurements and historical field data. Data from well production and monitoring records may be extracted and passed through a pipeline to clean and prepare the data for conversion to a machine learning friendly format. Predictive models may be built with the functionality of forecasting slug critical parameters such as slug frequency, slug volume, and slug amplitude. When the predictive models identify slugging conditions, mitigating actions may be performed to reduce or eliminate negative consequences of slug flow. The predictions may achieve a high level of accuracy, and as such, may be used to forecasts different slug quantities at multi-horizon scale simultaneously, without explicitly training additional models for characterizing slug quantities.

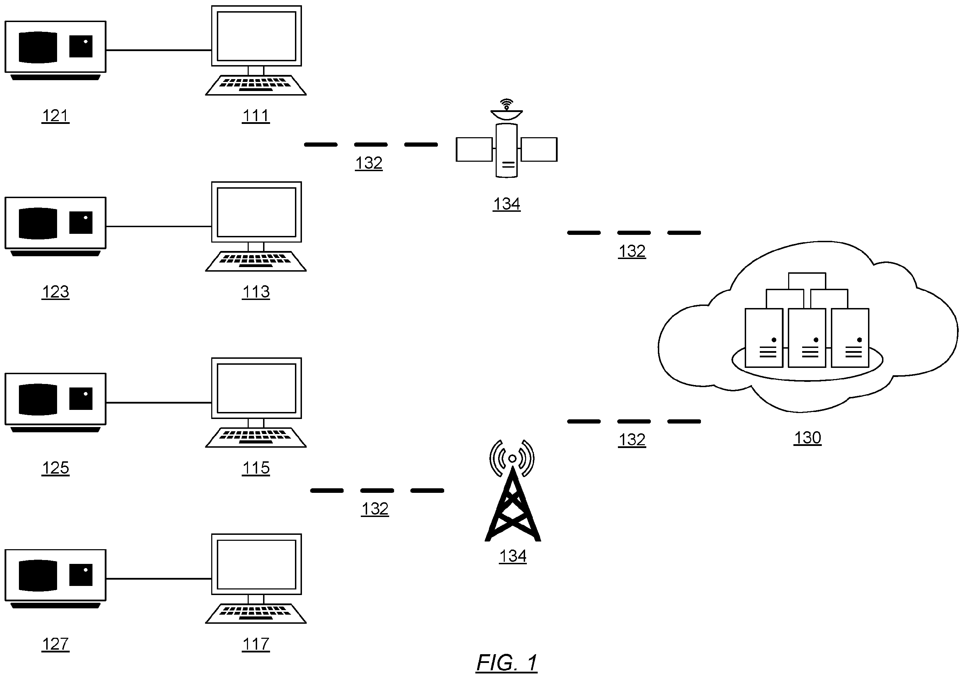

FIG. 1 depicts a cloud-based data sharing environment in which one or more embodiments may be implemented. In one or more embodiments, one or more of the modules and elements shown in FIG. 1 may be omitted, repeated, and/or substituted. Accordingly, embodiments should not be considered limited to the specific arrangement of modules shown in FIG. 1.

As shown in FIG. 1, the data sharing environment includes remote systems (111), (113), (115), (117), data acquisition tools (121), (123), (125), (127), and a data platform (130) connected to the data acquisition tools (121), (123), (125), (127), through communication links (132) managed by a communication relay (134).

In one or more embodiments, data acquisition tools (121), (123), (125), are configured for collecting data. In particular, various data acquisition tools (121), (123), (125), (127) are adapted to measure and detect the physical properties of physical objects and structures. Other data may also be collected, such as historical data, analyst user inputs, economic information, and/or other measurement data and other parameters of interest.

In one or more embodiments, the remote systems (111), (113), (115), (117), are operatively coupled to the data acquisition tools (121), (123), (125), (127), and in particular, may configured to send commands to the data acquisition tools (121), (123), (125), (127) and to receive data therefrom. The remote systems (111), (113), (115), (117) may therefore be provided with computer facilities for receiving, storing, processing, and/or analyzing data from the data acquisition tools (121), (123), (125), (127). In one or more embodiments, the remote systems (111), (113), (115), (117) may also be provided with, or have functionality for actuating, mechanisms of the data acquisition tools (121), (123), (125), (127). A data acquisition tool may be located in a physical location that differs from that of the remote system. As an example, a location may be, for example, a processing facility location, a data center location (e.g., server farm, etc.), an oil rig location, a wellsite location, a wind farm, a solar farm, etc. In one or more embodiments, the remote systems (111), (113), (115), (117) may then send command signals in response to data received, stored, processed, and/or analyzed, for example, to control and/or optimize various operations of the data acquisition tools (121), (123), (125), (127).

In one or more embodiments, the remote systems (111), (113), (115), (117) are communicatively coupled to the data platform (130) via the communication links (132). In one or more embodiments, the communication between the remote systems (111), (113), (115), (117) and the data platform (130) may be managed through a communication relay (134). For example, a satellite, tower antenna or any other type of communication relay (134) may be used to gather data from multiple remote systems (111), (113), (115), (117) and transfer the data to a remote data platform (130) for further analysis. In one or more embodiments, the data platform (130) is an E&P system configured to analyze, model, control, optimize, or perform management tasks of E&P field operations based on the data provided from the remote systems (111), (113), (115), (117). In one or more embodiments, the data platform (130) is provided with functionality for manipulating and analyzing the data. In one or more embodiments, the results generated by the data platform (130) may be displayed for user to view the results in a two-dimensional (2D) display, three-dimensional (3D) display, or other suitable displays. Although the remote systems (111), (113), (115), (117) are shown as separate from the data platform (130) in FIG. 1, in other examples, the remote systems (111), (113), (115), (117) and the data platform (130) may also be combined.

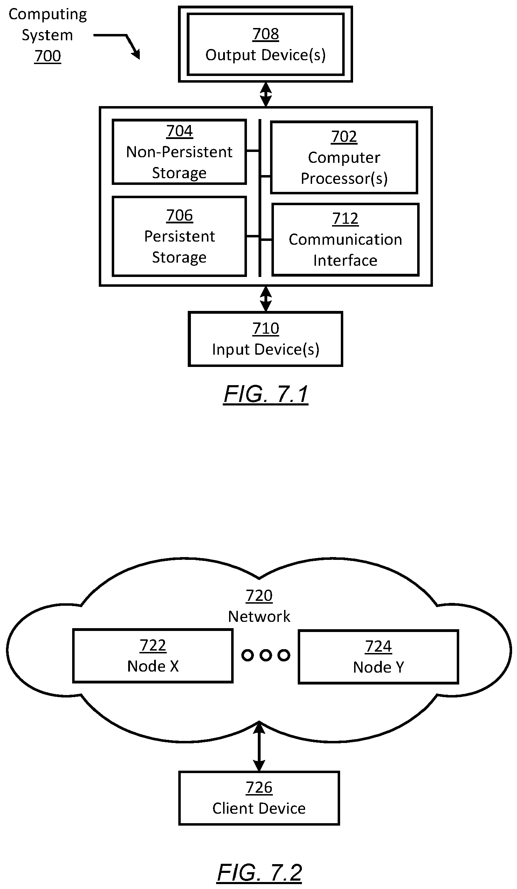

In one or more embodiments, the data platform (130) is implemented by deploying applications in a cloud-based infrastructure. As an example, the applications may include a web application that is implemented and deployed on the cloud and is accessible from a browser. Users (e.g., external clients of third parties and internal clients of to the data platform (130)) may log into the applications and execute the functionality provided by the applications to analyze and interpret data, including the data from the remote systems (111), (113), (115), (117). The data platform (130) may correspond to a computing system, such as the computing system shown in FIGs. 7.1 and 7.2 and described below.

In gas-lifted wells, where gas is injected through a one-way valve at the bottom of the well, casing-heading slugging may occur. Slug flow can also be present in wells without gas lift. This type of slugging, called well instability, generally features shorter slugs than does severe slugging, with several slugs simultaneously present in the riser.

In subsea production systems, characterized by deep wells and pipeline-riser setups, are especially prone to slug flow. Severe slugging in the riser can occur as a result of a pipeline topology-induced low-point angle at the base of the riser. The length of a single slug can stretch that of the entire riser.

Slugging can have a severe impact on operational instability, integrity of production facilities (e.g., pipeline, riser, etc.) and field production output. Failure to mitigate slugging can increase operating and capital costs.

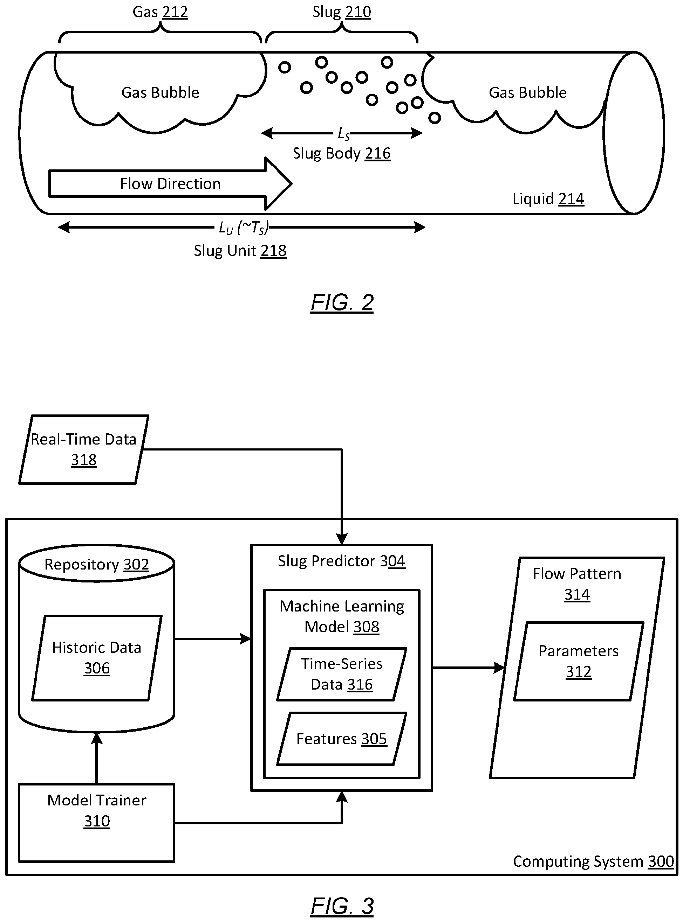

Turning to FIG. 2, a diagram of slug flow is shown in accordance with one or more embodiments of the disclosure. As illustrated, slug flow is complex gas-liquid flow pattern characterized by a continuous liquid phase with coherent blocks of aerated liquid, called slugs (210) or slug structures. The slugs are intermittently separated by volumes of gas (212), moving atop of a liquid layer (214).

Slug flow is typically quantified by its length scales, such as length $L_s$ of the slug body (216) and length $L_u$ of the slug unit (218), as well as corresponding time scales, such as slug frequency:

$$f_s = T_s^{-1}$$

where $T_S$ is the time of a slug unit passing by at a fixed position.

In a pipeline-riser system, a more complicated multiphase flow can develop than in a simple horizontal or vertical pipe. In particular, an undesired cycle caused by a typical severe slugging can generate unstable blowout, causing large fluctuations in pressure that lead to structural damage and reduce the production rate. In detail, the severe slugging can generate liquid overflow, high pressure in the separators, overload on the gas compressors, extra fatigue by repeated impact, increased corrosion, and low production.

Turning to FIG 3, a diagram of a computing system (300) is shown in accordance with one or more embodiments of the disclosure. The computing system (300) may be a computing system such as described below with reference to FIGS. 7.1 and 7.2. For example, the computing system (300) may be the E&P computing system (180) described in reference to FIG. 1.

In one or more embodiments, the computing system (300) includes a repository (302) and a slug predictor (304). The repository (302) may be any type of storage unit and/or device (e.g., a file system, database, collection of tables, or any other storage mechanism) for storing data. Further, the repository (302) may include multiple different storage units and/or devices. The multiple different storage units and/or devices may or may not be of the same type or located at the same physical site.

The repository (302) includes historic data (306) for a wellsite system, such as one of wellsite systems (192), (193), (195), and (197) shown in FIG. 1. The historic data (306) includes production parameters, provided by various downhole tools measuring the various parameters, such as temperature, flow rate, density, phase velocity, phase holdup, mixture density, mixture velocity, water (or liquid) holdup, water velocity, gas holdup, pipeline inlet pressure, pipeline outlet pressure, and the like.

The historic data (306) may be used as a training set, with the production parameters providing static covariates, observational inputs, and/or known inputs over multiple timesteps. Each timestep or group of timesteps is labeled with a corresponding set of forecasts (e.g., slugging/ non-slugging) representing a ground truth value for the slug predictor (304).

The slug predictor (304) includes functionality to forecast slugging conditions, using time series features (305) identified in historic data (306). The functionality may be provided by one or more machine learning models (308), The machine learning models (308) can be a deep learning-based neural network, such as a Temporal Fusion Transformer, that operates on real time data (318) on the input image (260) to forecast slugging conditions.

The Temporal Fusion Transformer (TFT) is an attention-based deep neural network (DNN) architecture for multi-horizon forecasting. The TFT architecture incorporates multiple elements to improve alignment of inputs and temporal relationships such as: (1) static covariate encoders which encode context vectors for use in other parts of the network; (2) gating mechanisms throughout and sample-dependent variable selection to minimize the contributions of irrelevant input; (3) a sequence-to-sequence layer to locally process known and observed inputs; and (4) a temporal self-attention decoder to learn any long-term dependencies present within the dataset.

TFT inputs static metadata, time-varying past inputs and time-varying a priori known future inputs. The different variables used as input correspond to at least one production parameter represented through the time-series data, such as static covariates, time-dependent features, and targets. Variable Selection is used for judicious selection of the most salient features based on the input. Gated Residual Network blocks enable efficient information flow with skip connections and gating layers. Time-dependent processing is based on LSTMs for local processing, and multi-head attention for integrating information from any time step.

The machine learning models (308) may be trained using training data that includes historic data (306), labeled with a flow pattern that corresponds to the time-series features. That is, the machine learning models (308) may learn the relationship between features of historic data (306) and the flow patterns (e.g., slugging/non-slugging).

The slug predictor (304) can be trained according to a variety of machine learning training techniques, for example, using a model trainer (310). The model trainer (310) is functionality configured to train the machine learning models (308) according to a supervised learning technique that uses historic data (306) as training set of labeled time-series data. The model trainer (310) can pass historic data (306) as training input through the machine learning models (308) to forecast parameters (312) of flow patterns (314) corresponding to the training input. The model trainer can compute a loss between the output forecast of the system 100 with a ground-truth set of forecasts corresponding to the training input. Gradients with respect to the loss can be computed for all model parameter values, e.g., weights, described across the various layers of the system and updated. One or more different loss functions can be used, such as functions that minimize quantile loss, summed across the quantile outputs making up of the forecasted flow pattern.

Once trained, the machine learning models (308) take time series data (316) generated from historic data (306) and real time data (318). Features (305) identified within the time series data (316) are used to forecast parameters (312) and flow patterns (314) for current pipeline conditions.

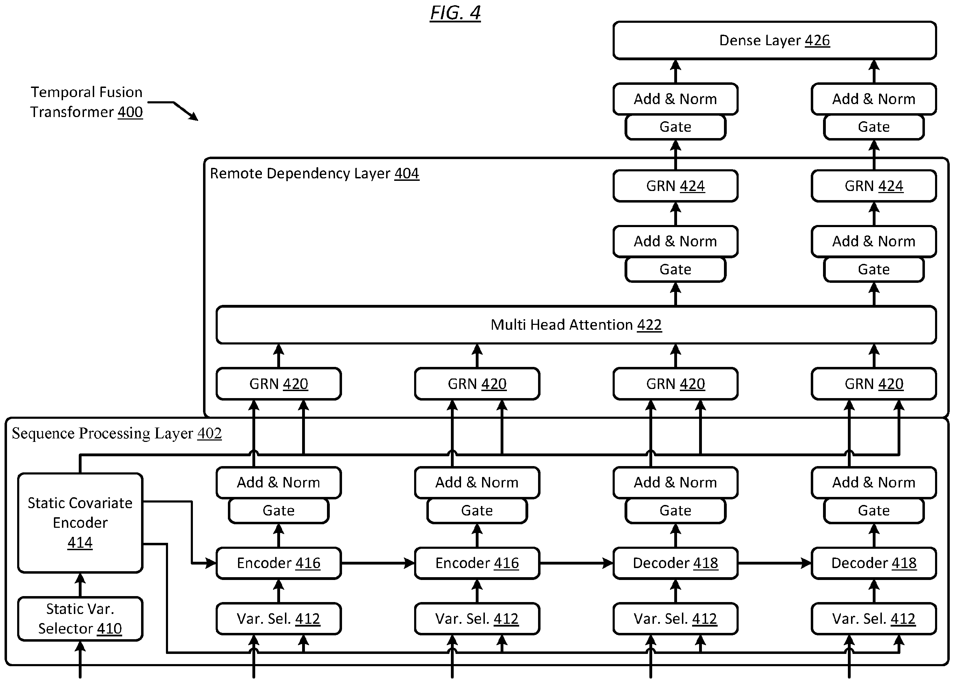

FIG. 4 is a functional diagram of a temporal fusion transformer model in accordance with one or more illustrative embodiments. The temporal fusion transformer (400) is configured to generate multi-horizon forecasts from time-series data for different variables. The different variables taken as input correspond to at least one entity represented through the time-series data, such as static covariates, time-dependent features, and targets.

As used herein, horizon forecasting refers to the prediction of different variables at a given timestep or time- steps (a "forecasting horizon"). Multi-horizon forecasting refers to prediction of different variables for more than one horizon.

The temporal fusion transformer (400) implements a sequence processing layer (402) and a remote dependency layer (404). In general, the sequence processing layer (402) is configured to generate temporal characteristics of the input time series data. The remote dependency layer (404) is configured to generate forecasts based on static covariates and the temporal characteristics received from the sequence processing layer (402). In combination, the two layers allow the temporal fusion transformer (400) to learn both long- and short-term temporal characteristics from both the static covariates and the time-dependent features of the time series data (316).

Variable selectors (410, 412) provide instance-wise variable selection of both static covariates and time-dependent variables. The static variable selector (410) is configured to receive dimensional vectors of real values derived from the input, i.e., for each static covariate, observational input, and known input... the variable selector (412) processes observational and known inputs, weighing different variables of the input according to a learned measure of relevance, for example based on correlations between the presence or absence of input variables and the value of a corresponding forecast.

The static covariate encoder (414) is configured to encode context vectors that represent the static covariates. These context vectors are processed as part of input for both the sequence processing layer (402) and the remote dependency layer (404), enabling the model to condition the temporal characteristics of the time-dependent input based on time-independent data represented by the static covariates.

The remote dependency layer (404) receives the temporal characteristics representing the short-term pattern identified in the time- window at each timestep, as the sequence processing layer (402) processes the input. In this way, the temporal features can capture relationships between the time-dependent and time-independent inputs that can fully use the heterogeneous nature of time-series data.

The encoder (416) can include a plurality of layers, including an input layer that is configured to receive a past observational input and the context vectors; one or more hidden layers; and an output layer that propagates a hidden state for the processed data. The decoder (418) receives the encoded sequence generated by the encoder (416), processing previous output from the decoder (418) and a respective known input for each timestep.

The output from the encoder (416) and the decoder (418) across each timestep forms a set of temporal characteristics that can represent a short-term pattern within the time-window analyzed. The temporal characteristics can include data from the context vectors encoding the static covariates, the observational inputs, and the known inputs. Gating and normalization can be performed to weigh, filter, or gate less relevant temporal characteristics.

Gated Residual Networks (GRNs) (420) gate the relative contribution of static variables to the temporal characteristics generated by the sequence processing layer. GRNs) (420) enhances temporal characteristics received from the sequence processing layer (402) with context vectors generated by the static covariate encoder (414), thereby promoting certain characteristics as more or less "relevant" at a given timestep. Relevancy can be measured, for example, based on a statistical correlation between the presence, absence, or value of a certain temporal characteristic at a given timestep, and the value of a predicted forecast that is generated using the given timestep.

The interpretable multi-head attention layer (422) learns long-term relationships between variables represented at different timesteps, with different "heads" attending to different subspaces according to different weight values that can be shared and/or additively aggregated among each head.

The multi-head sub-layers enables the use of multiple attention functions with an equivalent cost of utilizing attention, while the GRN sub-layer (424) uses a fully connected network to process the attention sublayers. The GRN applies multiple linear transformations on each position and a Rectified Linear Unit (ReLU) which extends the self-attention mechanism to efficiently consider representations of the relative positioning (*i.e.*, distances between sequence elements). An efficient implementation of a relation-aware self-attention mechanism is, thus, achieved.

A dense layer (426) processes the output from the remote dependency layer (404) to generate forecast ranges for each timestep of interest. The ranges can be expressed as confidence intervals (e.g., $10^{th}$, $50^{th}$, and $90^{th}$ percent) for the predicted variables at the associated timestep.

While FIG.s 3-4 show a configuration of components, other configurations may be used without departing from the scope of the invention. For example, various components may be combined to create a single component. As another example, the functionality performed by a single component may be performed by two or more components.

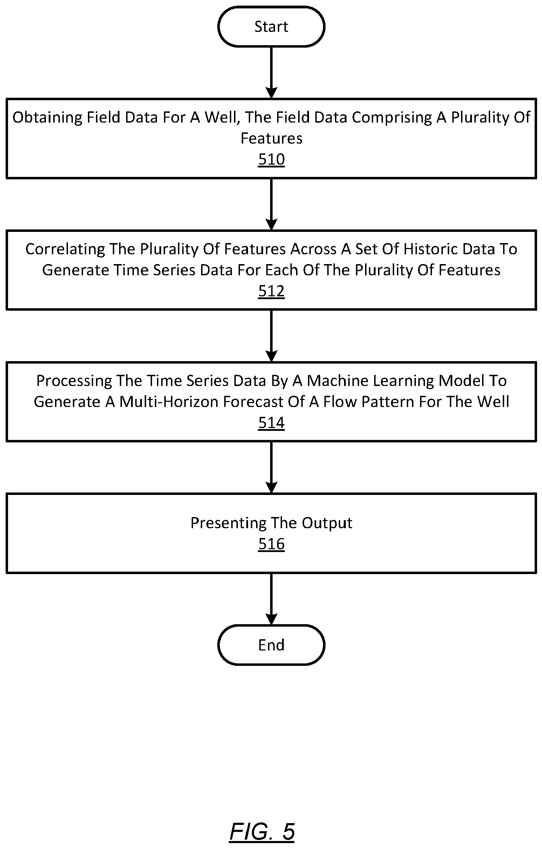

FIG. 5 shows a flowchart in accordance with one or more examples. One or more blocks shown in FIG. 5 may be combined, omitted, repeated, and/or performed in a different order among different examples. Accordingly, examples should not be considered limited to the specific number and arrangement of blocks shown in FIG. 5. FIG. 5 provides a general overview of one or more examples.

At step 510, field data is obtained for a well. The field data comprises a plurality of features a dataset is received from a data source in accordance with one or more examples. In one or more illustrative examples, the field data can be obtained from historical data stored in data platform and accessed through a set of RESTful (Representational State Transfer) APIs (Application Programming Interfaces). In one or more illustrative examples, the field data can be obtained in real time from a set of pipeline monitoring instruments, communicated to the server through an OPC interface.

At step 512, the plurality of features is correlated across a set of historic data to generate time series data for each of the plurality of features.

At step 514, the time series data is processed by a machine learning model to generate a multi-horizon forecast of a flow pattern for the well a temporal fusion transformer model is executed. The machine learning model takes, as an input, the time series data for each of the features. The machine learning model generates, as an output, a multi-horizon forecast of a flow pattern for gas-liquid slug flow. In one or more illustrative examples, the machine learning model can be a temporal fusion transformer model.

In one or more illustrative examples, processing the time series data further comprises determining short-term temporal characteristics at multiple forecasting horizons for each feature. These characteristics can be determined, for example, in a sequence processing layer of the temporal fusion transformer.

For example, one or more encoders may generate vector representations of the features that were identified across the time series data. Corresponding decoders may use those vector representations to predict a short-term pattern for each feature at a forecast horizon.

In one or more illustrative examples, processing the time series data further comprises determining long-term temporal characteristics at multiple forecasting horizons for each feature. For example, an attention processing layer of the temporal fusion transformer may generate a forecast at each horizon based on a short-term pattern predicted for each feature

In one or more illustrative examples, the machine learning model is a single temporal fusion transformer model with confidence intervals forecasted each time horizon. The temporal fusion transformer machine forecasts gas-liquid slugging at multi-horizon scale simultaneously with confidence intervals and without the need to explicitly train another machine for determining slug quantities, such as slug frequency, slug length, and slug amplitude.

At step 516, the output of the machine learning model is presented. The output is presented, for example, by generating a graphical user interface that provides a visualization of the flow pattern in a pipeline.

The output from the machine learning model is presented in the graphical user interface, for example, using display graphs, charts, or other data visualizations. The graphical user interface can provide information and tools to the user for assessing the current operation and flow patterns within the pipeline. The graphical user interface may include an alarm that is generated and presented when the forecasted flow pattern meets a threshold value that indicates a slugging condition in the pipeline.

In one or more illustrative examples, the process may further include training of the machine learning model. For example, in a supervised training process, each step of the time-series data maybe labeled with a corresponding flow pattern to form a training data set. seeing known machine learning techniques, the training set can be curated to include an appropriate number of data points in the training data set by for each flow condition, promoting adequate representation of each condition and reducing training set bias in the trained model.

While the various steps in this flowchart are presented and described sequentially, at least some of the steps may be executed in different orders, may be combined, or omitted, and at least some of the steps may be executed in parallel. Furthermore, the steps may be performed actively or passively.

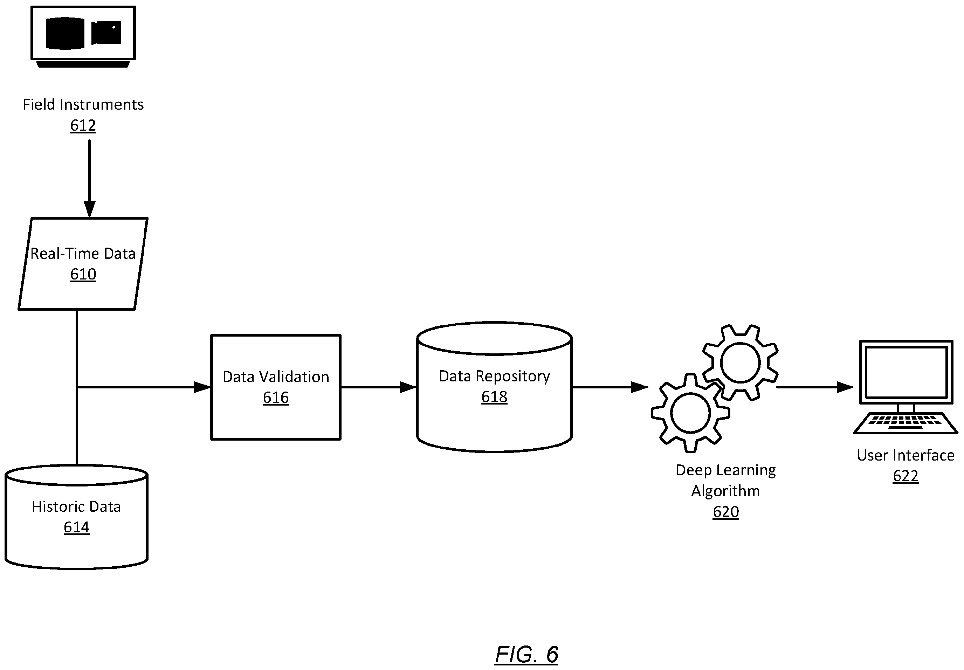

FIG. 6 is an illustration of a workflow through an exemplary system according to one or more illustrative embodiments. The example illustrated in FIG. 6 is for explanatory purposes only and not intended to limit the scope of the invention.

Real time data (610) from the subsea field instruments (612) and historical data (614) is communicated to the server through OPC (Object Linking and Embedding for Process Control) interface. In one or more embodiments of the invention, these data points may be published (or broadcasted) to the user (e.g., production control operators) from one or more subsurface components monitoring pipeline conditions the oilfield operations.

The raw field data can include, for example, wellhead pressure, wellhead temperature, phase flowrates, pipeline inlet/outlet pressure and temperature. To prevent ingestion of erroneous data, the raw field data undergoes data validation (616) before being archived in a data repository (618).

With respect to a current time, the deep learning algorithm (620), which can be a temporal fusion transformer, ingests the validated field data. The validated field data can they retrieve from the data repository, for example, by submitting one or more structured query language (SQL) statements for a predefined historical time through an appropriate API interface. A time series data of the validated data is then generated across the queried time period.

During training with the time series data, the deep learning algorithm (620) trains online to identify the slugging signatures. During prediction, the deep learning algorithm (620) predicts slugging events in the field, while also simultaneously providing forecasts on slug critical parameters such as slug frequency, slug length, slug amplitude, etc. The real-time and forecasted slugging parameters are then logged back into the data repository (618).

The connectivity between historian and web-based user interface (622) enables visualization of the slugging conditions in the pipeline. Predicted parameters and confidence intervals may be delivered into the web based graphical user interface of a user workstation for presentation using display graphs, charts, or other data visualizations provided by the interface enabling the user to assess the current operation and flow patterns within the pipeline. Accordingly, pipeline flow patterns may be monitored using automatic and/or manual surveillance, enabling the user to assess the current system status manually or automatically receive notifications of abnormal conditions.

Alarm thresholds may be incorporated into the user interface and associated with the pre-defined display of graphs for identification of abnormal deviations in pipeline flow conditions. The alarms for forecasted slugging occurrences are generated ahead of time based on the forecasted flow patterns received from the machine learning algorithms. The alarms, presented in the graphical user interface, enable the user to make decisions proactively regarding future slugging events and to execute preventive and/or mitigating actions prior to the predicted occurrence of adverse conditions at the wellhead. The alarm can be generated based upon a forecasted quantile flow pattern, such as when the forecasted confidence interval for a slugging condition in the pipeline meets a threshold value indicative of the flow pattern.

Embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure. For example, as shown in FIG. 7.1, the computing system (700) may include one or more computer processors (702), non-persistent storage (704), persistent storage (706), a communication interface (712) (e.g., Bluetooth interface, infrared interface, network interface, optical interface, etc.), and numerous other elements and functionalities that implement the features and elements of the disclosure. The computer processor(s) (702) may be an integrated circuit for processing instructions. The computer processor(s) may be one or more cores or micro-cores of a processor. The computer processor(s) (702) includes one or more processors. The one or more processors may include a central processing unit (CPU), a graphics processing unit (GPU), a tensor processing unit (TPU), combinations thereof, etc.

The input devices (710) may include a touchscreen, keyboard, mouse, microphone, touchpad, electronic pen, or any other type of input device. The input devices (710) may receive inputs from a user that are responsive to data and messages presented by the output devices (708). The inputs may include text input, audio input, video input, etc., which may be processed and transmitted by the computing system (700) in accordance with the disclosure. The communication interface (712) may include an integrated circuit for connecting the computing system (700) to a network (not shown) (e.g., a local area network (LAN), a wide area network (WAN) such as the Internet, mobile network, or any other type of network) and/or to another device, such as another computing device.

Further, the output devices (708) may include a display device, a printer, external storage, or any other output device. One or more of the output devices may be the same or different from the input device(s). The input and output device(s) may be locally or remotely connected to the computer processor(s) (702). Many different types of computing systems exist, and the aforementioned input and output device(s) may take other forms. The output devices (708) may display data and messages that are transmitted and received by the computing system (700). The data and messages may include text, audio, video, etc., and include the data and messages described above in the other figures of the disclosure.

Software instructions in the form of computer readable program code to perform embodiments may be stored, in whole or in part, temporarily or permanently, on a non-transitory computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments of the invention, which may include transmitting, receiving, presenting, and displaying data and messages described in the other figures of the disclosure.

The computing system (700) in FIG. 7.1 may be connected to or be a part of a network. For example, as shown in FIG. 7.2, the network (720) may include multiple nodes (e.g., node X (722), node Y (724)). Each node may correspond to a computing system, such as the computing system shown in FIG. 7.1, or a group of nodes combined may correspond to the computing system shown in FIG. 7.1. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (700) may be located at a remote location and connected to the other elements over a network.

The nodes (e.g., node X (722), node Y (724)) in the network (720) may be configured to provide services for a client device (726), including receiving requests and transmitting responses to the client device (726). For example, the nodes may be part of a cloud computing system. The client device (726) may be a computing system, such as the computing system shown in FIG. 7.1. Further, the client device (726) may include and/or perform all or a portion of one or more embodiments of the invention.

The computing system of FIG. 7.1 may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a GUI that displays information on a display device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

As used herein, the term "connected to" contemplates multiple meanings. A connection may be direct or indirect (e.g., through another component or network). A connection may be wired or wireless. A connection may be temporary, permanent, or semi-permanent communication channel between two entities.

The various descriptions of the figures may be combined and may include or be included within the features described in the other figures of the application. The various elements, systems, components, and steps shown in the figures may be omitted, repeated, combined, and/or altered as shown from the figures. Accordingly, the scope of the present disclosure should not be considered limited to the specific arrangements shown in the figures.

In the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, the term "or" is an "inclusive or" and, as such includes the term "and." Further, items joined by the term "or" may include any combination of the items with any number of each item unless, expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

**Claims**

1. A method for multi-horizon forecasting of gas-liquid slug flow, comprising:

   obtaining field data for a well, the field data comprising a plurality of features;
   correlating the plurality of features across a set of historic data to generate time series data for each of the plurality of features;
   processing the time series data by a machine learning model to generate a multi-horizon forecast of a flow pattern for the well; and
   presenting the output.

2. The method of claim 1, wherein processing the time series data by the machine learning model further comprises:

   determining short-term temporal characteristics at multiple forecasting horizons for each feature, including:
   encoding vector representations of the features that were correlated across the time series data; and
   decoding the vector representations to predict a short-term pattern for each feature at a forecast horizon.

3. The method of any one of the preceding claims, wherein processing the time series data by the machine learning model further comprises:

   determining long-term temporal characteristics at multiple forecasting horizons for each feature, including:
   generating a forecast at each horizon based on a short-term pattern predicted for each feature.

4. The method of any one of the preceding claims, wherein the machine learning model is a single temporal fusion transformer model, and the flow pattern further comprises values of slug frequency, slug length, and slug amplitude, with confidence intervals forecasted each time horizon.

5. The method of any one of the preceding claims, further comprising:

   labeling each step of the time-series data with a corresponding flow pattern to form a training data set; and

training the machine learning model with the training data set.

6. The method of claim 5, further comprising:
curating the training data set to include an appropriate number of data points for each flow condition.

7. The method of any one of the preceding claims, wherein presenting the output further comprises:

generating a graphical user interface visualizing the flow pattern in a pipeline;
presenting the output from the machine learning model in the graphical user interface; and generating an alarm within the graphical user interface when the forecasted flow pattern meets a threshold value that indicates a slugging condition in the pipeline.

8. A computer program product comprising non-transitory computer-readable program code that, when executed by a computer processor of a computing system, cause the computing system to perform the method of any one of the preceding claims.

9. A system comprising:

a computer processor;
memory; and
instructions stored in the memory and executable by the computer processor to cause the computer processor to perform the method of any one of the claims 1 - 7.

121   111

132   134

123   113

132

125   115

132

127   117

134

130

132

EP 4 394 159 A1

10

*FIG. 1*

*FIG. 2*

*FIG. 3*

FIG. 4

Dense Layer 426

Temporal Fusion
Transformer 400

**Remote Dependency Layer 404**

Add & Norm

Gate

Add & Norm

Gate

GRN 424

GRN 424

Add & Norm

Gate

Add & Norm

Gate

Multi Head Attention 422

GRN 420

GRN 420

GRN 420

GRN 420

**Sequence Processing Layer 402**

Static Covariate
Encoder
414

Add & Norm

Gate

Add & Norm

Gate

Add & Norm

Gate

Add & Norm

Gate

Encoder 416

Encoder 416

Decoder 418

Decoder 418

Static Var.
Selector 410

Var. Sel. 412

Var. Sel. 412

Var. Sel. 412

Var. Sel. 412

EP 4 394 159 A1

```
                         ┌─────────────┐
                         │    Start    │
                         └──────┬──────┘
                                │
                                ▼
  ┌──────────────────────────────────────────────────────────────┐
  │ Obtaining Field Data For A Well, The Field Data Comprising A   │
  │ Plurality Of Features                                          │
  │                            510                                 │
  └──────────────────────────────┬───────────────────────────────┘
                                  │
                                  ▼
  ┌──────────────────────────────────────────────────────────────┐
  │ Correlating The Plurality Of Features Across A Set Of Historic │
  │ Data To Generate Time Series Data For Each Of The Plurality    │
  │ Of Features                                                    │
  │                            512                                 │
  └──────────────────────────────┬───────────────────────────────┘
                                  │
                                  ▼
  ┌──────────────────────────────────────────────────────────────┐
  │ Processing The Time Series Data By A Machine Learning Model To │
  │ Generate A Multi-Horizon Forecast Of A Flow Pattern For The    │
  │ Well                                                           │
  │                            514                                 │
  └──────────────────────────────┬───────────────────────────────┘
                                  │
                                  ▼
  ┌──────────────────────────────────────────────────────────────┐
  │                    Presenting The Output                       │
  │                            516                                 │
  └──────────────────────────────┬───────────────────────────────┘
                                  │
                                  ▼
                         ┌─────────────┐
                         │     End     │
                         └─────────────┘
```

*FIG. 5*

Field Instruments
612

Real-Time Data
610

Historic Data
614

Data Validation
616

Data Repository
618

Deep Learning
Algorithm
620

User Interface
622

*FIG. 6*

Computing
System
700

708
Output Device(s)

704
Non-Persistent
Storage

702
Computer
Processor(s)

706
Persistent
Storage

712
Communication
Interface

710
Input Device(s)

*FIG. 7.1*

720
Network

722
Node X

724
Node Y

726
Client Device

*FIG. 7.2*

Europäisches
Patentamt

European
Patent Office

Office européen
des brevets

# EUROPEAN SEARCH REPORT

Application Number

EP 23 22 0408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X <br> Y | KR 102 379 695 B1 (NAT UNIV GYEONGSANG IACF [KR]) 28 March 2022 (2022-03-28) <br> * paragraph [0005]; claim 1 * <br> * paragraph [0017] * <br> * paragraph [0046] - paragraph [0049]; figure 1 * <br> * paragraph [0102] * <br> * paragraph [0091] - paragraph [0092] * <br> ----- | 1,5-9 <br><br> 2-4 | INV. <br> E21B43/12 |
| X | ALI NASEEM ET AL: "Data-driven machine learning for accurate prediction and statistical quantification of two phase flow regimes", <br> JOURNAL OF PETROLEUM SCIENCE AND ENGINEERING, ELSEVIER, AMSTERDAM, NL, <br> vol. 202, 23 February 2021 (2021-02-23), XP086556319, <br> ISSN: 0920-4105, DOI: <br> 10.1016/J.PETROL.2021.108488 <br> [retrieved on 2021-02-23] <br> * the whole document * <br> ----- | 1,8,9 | |
| X | CN 110 630 244 B (DONGYING ZHITU DATA TECH CO LTD) 2 December 2022 (2022-12-02) <br> * paragraph [0002] * <br> * paragraph [0077] * <br> * paragraph [0011] * <br> * paragraph [0021] - paragraph [0022] * <br> ----- | 1-4,8,9 | TECHNICAL FIELDS SEARCHED (IPC) <br><br> E21B |
| Y | WO 2021/126500 A1 (GOOGLE LLC [US]) 24 June 2021 (2021-06-24) <br> * claim 1; figure 1 * <br> ----- <br> -/-- | 2-4 | |

The present search report has been drawn up for all claims

| Place of search | Date of completion of the search | Examiner |
|---|---|---|
| The Hague | 14 May 2024 | Dantinne, Patrick |

EPO FORM 1503 03.82 (P04C01)

Europäisches
Patentamt

European
Patent Office

Office européen
des brevets

# EUROPEAN SEARCH REPORT

Application Number

EP 23 22 0408

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM TEA-WOO ET AL: "Modeling and prediction of slug characteristics utilizing data-driven machine-learning methodology", JOURNAL OF PETROLEUM SCIENCE AND ENGINEERING, ELSEVIER, AMSTERDAM, NL, vol. 195, 8 August 2020 (2020-08-08), XP086331434, ISSN: 0920-4105, DOI: 10.1016/J.PETROL.2020.107712 [retrieved on 2020-08-08] * the whole document * | 1-9 | |

TECHNICAL FIELDS
SEARCHED      (IPC)

The present search report has been drawn up for all claims

| Place of search | Date of completion of the search | Examiner |
|---|---|---|
| The Hague | 14 May 2024 | Dantinne, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0408

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | | Publication date | Patent family member(s) | | Publication date |
|---|---|---|---|---|---|
| KR 102379695 | B1 | 28-03-2022 | NONE | | |
| CN 110630244 | B | 02-12-2022 | NONE | | |
| WO 2021126500 | A1 | 24-06-2021 | CN | 114503124 A | 13-05-2022 |
| | | | EP | 4022516 A1 | 06-07-2022 |
| | | | KR | 20220058626 A | 09-05-2022 |
| | | | US | 2023018125 A1 | 19-01-2023 |
| | | | WO | 2021126500 A1 | 24-06-2021 |

EPO FORM P0459

For more details about this annex : see Official Journal of the European Patent Office, No. 12/82